# EUROPÄISCHE PATENTANMELDUNG

(11) **EP 1 428 593 A1**
(43) Veröffentlichungstag der Anmeldung: **16.06.2004**
(21) Anmeldenummer: 02406082.4
(22) Anmeldetag: 09.12.2002
(51) Int. Cl.: B21F 23/00, B65G 47/14

(54) **Verfahren und Vorrichtung zum Vereinzeln von Drähten eines Drahtbündels**

(71) Anmelder: H.A. SCHLATTER AG, CH-8952 Schlieren Zürich (CH)
(72) Erfinder: Kämpf Hans, 8966 Oberwil-Lieli (CH); Rappold Dietmar, 8953 Dietikon (CH)
(74) Vertreter: Roshardt, Werner Alfred, Dipl.-Phys.

(57) **Zusammenfassung**

Bei einem Verfahren zum Vereinzeln von Drähten eines Drahtbündels oder ähnlichen langen, dünnen, gebündelten Objekten wird das Drahtbündel auf eine in Zuführrichtung geneigte Zuführebene (1) gegeben, so dass die Drähte sich unter Wirkung der Schwerkraft auf ein Führungsorgan mit Kontrollspalt (8)-zu bewegen können. Der Kontrollspalt (8) hat eine dem Drahtdurchmesser entsprechende Breite und ist zur Aufnahme der vereinzelten Drähte in Form einer einlagigen Drahtschicht ausgebildet. Ein Hebbeelement (12) wird durch die Zuführebene (1) hindurch nach oben entgegen der Zuführichtung gegen die sich bewegenden Drähte geführt. Die Bewegung des Hebeelements (12) nach oben wirkt der Schwerkraft entgegen und führt zu einer verbesserten parallelen Ausrichtung der Drähte und zu einer besseren Zuführung der Drähte zum Kontrollspalt (8).

## Beschreibung

### Technisches Gebiet

Die Erfindung betrifft ein Verfahren zum Vereinzeln von Drähten eines Drahtbündels oder ähnlichen langen, dünnen, gebündelten Objekten, wobei das Drahtbündel auf eine in Zuführrichtung geneigte Zuführebene gegeben wird, so dass die Drähte sich unter Wirkung der Schwerkraft auf ein Führungsorgan mit Kontrollspalt zu bewegen können, welcher eine einem Durchmesser der Drähte angepasste Breite hat und zur Aufnahme der vereinzelten Drähte in Form einer einlagigen Drahtschicht ausgebildet ist. Weiter bezieht sich die Erfindung auf eine Vorrichtung zur Durchführung des Verfahrens.

### Stand der Technik

Bei Gitterschweissmaschinen, die mit Drähten mit vorkonfektionierter Länge arbeiten, ist es erforderlich, die Drähte, welche als Bündel angeliefert werden, zu vereinzeln. Die Geschwindigkeit und Zuverlässigkeit der Vereinzelung kann ganz wesentlich zur Produktionsleistung der Schweissmaschine beitragen.

Vorrichtungen und Verfahren zum Vereinzeln von Drähten gehören an sich zum Stand der Technik.

Die CH 691 669 (Schlatter) zeigt ein solches Verfahren, wobei das Drahtbündel mit mehreren nebeneinander angeordneten Bearbeitungselementen bearbeitet wird, bevor es zum Kontrollspalt gelangt. Die Bearbeitungselemente verfügen über eine zur Zuführebene parallele Streichkante und eine gegen das Drahtbündel gerichtete Abstreifkante. Die Streichkante wird über eine soeben entstandene einlagige Drahtschicht geführt, abgehoben und wieder an den Ausgangspunkt zurückgeführt. Das heisst, es wird eine kreisende Bewegung ausgeführt, ähnlich wie beim manuellen Vereinzeln der Drähte durch eine Bedienperson. Die Abstreifkante schiebt dabei all jene Drähte zum Drahtbündel zurück, welche über das einlagige Drahtniveau hinausragen.

Bei der AT 368 414 (EVG) erfasst ein schwenkbarer Abstreifdaumen am Eingang des Kontrollspalts alle über der untersten Drahtlage liegenden Drähte und schiebt diese zum Drahtbündel zurück. Der Abstreifdaumen führt eine lineare Bewegung aus.

In der Praxis zeigt sich allerdings, dass bei den bekannten Vorrichtungen Probleme auftreten. Wegen der hohen Flexibilität der vorgefertigten Drahtstücke können sich deren Enden relativ frei bewegen und leicht überkreuzen. Dies führt dazu, dass die Zuführung der Drahtstücke gestört oder gar blockiert wird. Ausserdem setzen die bekannten Vorrichtungen, welche von oben auf die Drähte einwirken, voraus, dass sich die Drähte der untersten Lage selbständig parallel anordnen. Die erwähnten Vorrichtungen und Verfahren sind zudem besonders für sehr dünne Drähte geeignet.

### Darstellung der Erfindung

Aufgabe der Erfindung ist es, ein dem eingangs genannten technischen Gebiet zugehörendes Verfahren zu schaffen, welches zur Vereinzelung von Drähten geeignet ist und die Zuführung der Drähte sowie deren parallele Ausrichtung verbessert. Das Verfahren soll mit möglichst geringem technischem Aufwand maschinell umgesetzt werden können.

Die Lösung der Aufgabe ist durch die Merkmale des Anspruchs 1 definiert. Gemäss der Erfindung wird ein Hebeelement durch die Zuführebene hindurch nach oben, entgegen der Zuführrichtung gegen die sich bewegenden Drähte geführt.

Die Bewegung des Hebeelements nach oben wirkt der Schwerkraft entgegen. Dies führt dazu, dass die Drähte, welche sich unter Wirkung der Schwerkraft auf das Führungsorgan hin bewegen, aufgelockert werden. Gleichzeitig werden einige der Drähte, besonders jene, welche noch überkreuzt oder ineinander verkeilt sind, wieder entgegen der Zuführrichtung zurück gestossen, so dass die Anzahl zum Führungsorgan geförderter Drähte pro Zeiteinheit vermindert wird. Dies hat zur Folge, dass die Vereinzelung der Drähte zusätzlich und bereits vor dem Führungsorgan unterstützt wird. Schliesslich führt die Auflockerung der Drähte und das Zurückstossen eines Teils der Drähte zu einer besseren Zuführung zum Führungsorgan, indem vermieden wird, dass ineinander verkeilte Drähte den Zugang zum Kontrollspalt blockieren. Eine sich bildende Blockade wird nämlich durch das Hebeelement bereits frühzeitig wieder aufgelöst.

Die Zuführebene kann durch eine massive Platte, durch ein Führungsgitter bzw. durch Führungsbalken oder andere Mittel gebildet werden.

Als Zuführrichtung wird jene geometrische Richtung verstanden, welche der Transportrichtung der Drähte bei der Zuführung entlang der geneigten Zuführebene zum Führungsorgan mit Kontrollspalt entspricht. Sie ist im Wesentlichen parallel zur Falllinie der geneigten Zuführebene.

Das erfindungsgemässe Verfahren ist nicht auf die Vereinzelung von Drähten beschränkt, vielmehr können auch andere lange, dünne gebündelte Objekte verarbeitet werden.

Vorzugsweise wirkt das Hebeelement mit einem gegenüber dem Hebeelement angeordneten Expansionsraum zusammen. Dieser Expansionsraum nimmt Drähte auf, welche durch das Hebeelement nach oben gedrückt werden und fördert deren parallele Ausrichtung. In einem nächsten Schritt können die Drähte das Hebeelement passieren und unter Wirkung der Schwerkraft weiter zum Führungsorgan gelangen.

Mit Vorteil ist die Grösse des Expansionsraums einstellbar. Wenn die Höhe und/oder die Tiefe des Expansionsraums veränderbar ist, kann das Verfahren zur Drahtvereinzelung den Dimensionen der Drähte, insbesondere deren Durchmesser, auf einfache Art und Weise angepasst werden. Vorzugsweise ist in diesem Fall auch die Breite des Kontrollspalts an den Drahtdurchmesser anpassbar.

Mit Vorteil wird das Drahtbündel in einem Stauraum gestaut, wobei der Stauraum in Zuführrichtung hinter einem Drahtrückhalteelement gebildet wird. Dadurch, dass dem Hebeelement ein Stauraum vorgelagert ist, kann die Anzahl Drähte, die auf das Hebeelement gelangen, dosiert werden. Auch wenn ein grosses Drahtbündel auf die Zuführebene gegeben wird, passiert nur eine bestimmte Anzahl von Drähten das Drahtrückhalteelement und gelangt zum Hebeelement. Gleichzeitig wird auch der Druck auf die Vereinzelungszone beim Hebeelement verringert. Beides führt dazu, dass die parallele Ausrichtung der Drähte sowie der Weitertransport zum Führungsorgan verbessert werden. Anstelle eines Stauraums kann auch ein anderer Verfahrensschritt vorgesehen werden, welcher die Anzahl zur Vereinzelungszone geförderter Drähte verringert, z. B. mechanische Mittel, welche das Drahtbündel aufteilen und die einzelnen Teile in die Vereinzelungszone transportieren.

Vorzugsweise ist der Expansionsraum gegenüber dem Stauraum abgetrennt und in Zuführrichtung vor dem Stauraum angeordnet. Die zu vereinzelnden Drähte werden also zuerst im Stauraum gestaut, damit der Druck auf die Vereinzelungszone vermindert wird. In der Vereinzelungszone wirken dann das Hebeelement und der gegenüber angeordnete Expansionsraum zusammen, so dass die in die Vereinzelungszone geförderten Drähte parallel ausgerichtet und schliesslich weiter zum Führungsorgan bewegt werden.

Mit Vorteil ist der Expansionsraum als Aussparung im Drahtrückhalteelement ausgebildet. Dadurch dient das Drahtrückhalteelement gleichzeitig zur Bildung eines Stauraums hinter dem Element und zur Abtrennung von Stauraum und Expansionsraum. Eine Aussparung, welche auf einem wesentlichen Teil ihrer Innenfläche durch Wände begrenzt ist, bietet überdies den Vorzug, dass die Drähte, welche parallel ausgerichtet werden sollen, optimal geführt werden und dass sie sich nicht an Kanten oder in Aussparungen verfangen können.

Alternativ dazu können ein separates Drahtrückhalteelement und ein separates Führungsorgan beabstandet hintereinander angeordnet sein, wobei der Zwischenraum den Expansionsraum bildet. In diesem Fall ist es vorteilhaft, wenn das Führungsorgan Mittel zur Aufnahme der Drähte aus dem Expansionsraum aufweist, z. B. eine Öffnung zum Expansionsraum, welche sich in Zuführrichtung verjüngt.

Vorzugsweise ist das Hebeelement sternförmig und rotiert entgegen der Zuführrichtung. Ein sternförmiges Hebeelement weist einen oder mehrere Arme auf, welche bei Rotation des Elements durch die Zuführebene hindurch nach oben geführt werden und dort auf die sich bewegenden Drähte einwirken. Dazu weist die Zuführebene Aussparungen, z. B. Schlitze auf, durch welche die Arme nach oben, durch die Zuführebene hindurch treten können.

Durch die Form und die Anzahl der Arme sowie die Wahl der Rotationsgeschwindigkeit lässt sich der Einfluss des Hebeelements auf die Drähte beeinflussen. Mit Vorteil weist das Hebeelement eine gewisse Symmetrie auf, z. B. indem es zwei gegenüberliegende Arme oder eine grössere Anzahl Arme aufweist, die gleichmässig auf dem Umfang des Elements angeordnet sind. Dadurch wird die Unwucht des Elements und damit die Belastung auf die Lager des Elements gering gehalten.

Die Form der Arme wird mit Vorteil so gewählt, dass sie beim Hindurchtreten durch die Zuführebene nur allmählich auf die Drähte einwirken. Dies wird z. B. dadurch erreicht, dass die äussere, im Wesentlichen tangentiale Begrenzung eines Arms beim Hindurchtreten durch die Zuführebene entgegen der Zuführebene geneigt ist. Abhängig vom Drahtdurchmesser und von der Geometrie der Vorrichtung können die Arme als Buckel oder Zacken auf dem Umfang des Elements oder auch als radiale Ausleger ausgeformt sein.

Verschiedene Arme eines Hebeelements können auch unterschiedlich ausgebildet sein, z. B. indem entlang des Umfangs des sternförmigen Hebeelements Arme, welche vor allem zu einem Anheben der Drähte führen, mit Armen abwechseln, welche vor allem zu einem Zurückstossen der Drähte führen.

Das Hebeelement kann auch anders ausgebildet sind, z. B. als Exzenterscheibe oder als Hebeplatte, welche periodisch, zufällig oder sensorgesteuert durch die Zuführebene hindurch nach oben und wieder zurück bewegt wird. Der Antrieb einer solchen Hebeplatte kann z. B. über einen pneumatisch oder hydraulisch betätigten Kolben, einen Nocken oder ein Pleuel erfolgen.

Die vereinzelten parallelen Drähte können im Anschluss an das Führungsorgan einer Mitnehmerscheibe zugeführt werden, welche die einzelnen Drähte in einem vorgegebenen Abstand weiter fördert.

Eine Vorrichtung zum Vereinzeln von Drähten eines Drahtbündels oder ähnlich langen, dünnen gebündelten Objekten verfügt über
a) eine in Zuführrichtung (d. h. z. B. gegen eine Drahtauskämmvorrichtung hin) geneigte Zuführebene zur Aufnahme des Drahtbündels;
b) ein Hebeelement, welches entgegen der Zuführrichtung durch die Zuführebene hindurch nach oben gegen die Drähte geführt werden kann; sowie
c) ein zentral angeordnetes Führungsorgan mit Kontrollspalt, welcher eine dem Durchmesser der Drähte angepasste Spaltbreite hat und zur Aufnahme der Drähte in Form einer einlagigen Drahtschicht ausgebildet ist.

Die Neigung der Zuführebene wird so gewählt, dass sich die Drähte unter der Wirkung der Schwerkraft mit einer gewünschten Geschwindigkeit auf das Führungsorgan hin bewegen. Die Breite der Zuführebene entspricht der Drahtlänge.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnung

Die zur Erläuterung des Ausführungsbeispiels verwendete Zeichnung zeigt:

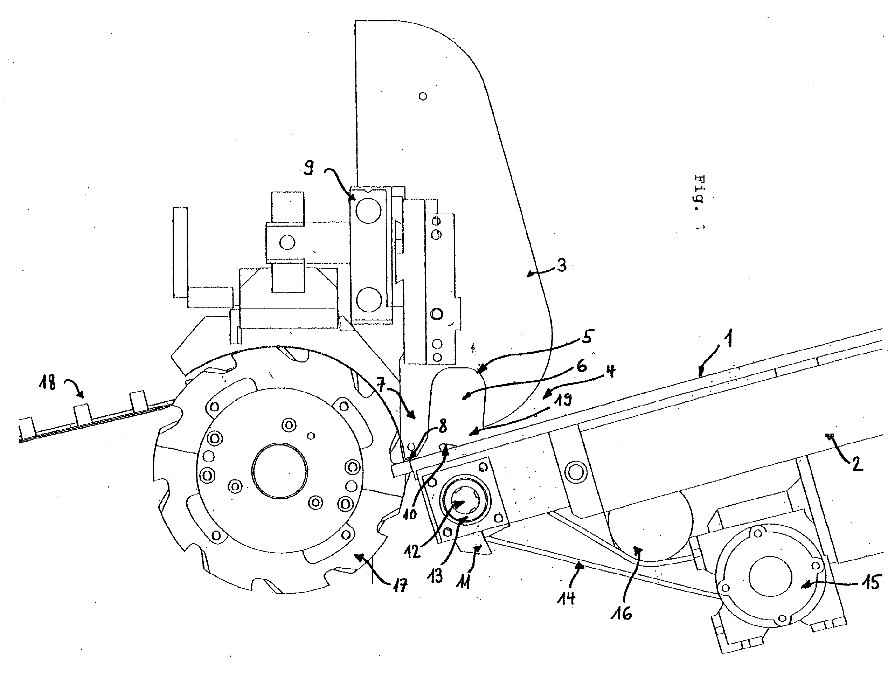

- Fig. 1: Einen Querschnitt einer erfindungsgemässen Vorrichtung zum Vereinzeln von Drähten.

### Wege zur Ausführung der Erfindung

Figur 1 zeigt einen Querschnitt einer erfindungsgemässen Vorrichtung zum Vereinzeln von Drähten, wie sie insbesondere in einer Gitterschweissmaschine zur Vereinzelung der Querdrähte eingesetzt werden kann. Die Vorrichtung weist eine gegen die Zuführrichtung geneigte Zuführebene 1 auf. Diese ist auf der Oberseite einer geneigten Maschinenbasis 2 angeordnet. Mit Vorteil weist die Zuführebene 1 in Zuführrichtung verlaufende Rippen auf, um die Reibung zwischen den Drähten und der Zuführebene zu minimieren. Die Rippen können z. B. durch Drähte gebildet werden, die auf ein Blech aufgeschweisst sind.

Oberhalb der Zuführebene 1 ist ein Drahtrückhalter 3 angeordnet, welcher im Wesentlichen als eine vertikale flache Platte ausgebildet ist, deren Hauptfläche parallel zur Zuführrichtung ist. Die Begrenzung der Platte hat auf der der Zuführebene 1 zugewandten äusseren Seite eine abgerundete Form, so dass sich die Öffnung zwischen der Zuführebene 1 und dem Drahtrückhalter 3 in Zuführrichtung kontinuierlich verengt. Hinter dem Drahtrückhalter 3 wird dadurch ein Stauraum 4 gebildet.

Der Drahtrückhalter 3 weist auf seiner Unterseite eine im Wesentlichen rechteckige Aussparung 5 mit abgerundeten Kanten auf, so dass die Öffnung zwischen der Zuführebene 1 und dem Drahtrückhalter 3 abschnittsweise erweitert ist und ein Expansionsraum 6 gebildet wird.

Der Drahtrückhalter 3 bildet an seinem der Zuführebene 1 zugewandten inneren Ende ein Führungsorgan 7, dessen Begrenzung auf der Unterseite flach ist, so dass ein Kontrollspalt 8 in der Form eines Kanals mit konstantem Querschnitt zwischen dem Drahtrückhalter 3 und der Zuführebene 1 gebildet wird. Der Eingang des Kontrollspalts 8 erweitert sich in Richtung des Expansionsraums 6.

Der Drahtrückhalter 3 ist an einer Haltevorrichtung 9 so befestigt, dass er vertikal verschoben werden kann. Dies erlaubt eine Vergrösserung bzw. Verkleinerung der Breite des Kontrollspalts 8, so dass die Vorrichtung verschiedenen Durchmessern der zu vereinzelnden Drähte angepasst werden kann. Gleichzeitig wird auch die vertikale Ausdehnung des Expansionsraums 6 verändert.

Unterhalb des Expansionsraums weist die Zuführebene 1 eine schlitzförmige Öffnung auf, wobei der Schlitz in Zuführrichtung orientiert ist. Durch diesen Schlitz greifen Arme 10, 11 eines Hebeelements 12 durch die Zuführebene 1 hindurch nach oben. Das Hebeelement 12 wird durch eine in der Maschinenbasis 2 drehbar gelagerte Scheibe 13 gebildet, an deren äusseren Begrenzung die zwei Arme 10, 11 angeordnet sind. Der Querschnitt der Arme 10, 11 ist im Wesentlichen trapezförmig, wobei die äussere Begrenzung schräg verläuft, so dass bei einer Rotation der Scheibe 13 der Teil der Arme 10, 11, welcher über die Zuführebene hinaus ragt, in Zuführrichtung kontinuierlich zunimmt. Die Scheibe 13 wird über einen Riemen 14 angetrieben, welcher durch einen Motor 15 bewegt werden kann. Der Riemen 14 wird durch eine Umlenkrolle 16 so geführt, dass er durch zwei Öffnungen in der Unterseite der Maschinenbasis 2 um die Scheibe 13 geführt werden kann.

Anschliessend an den Kontrollspalt 8 weist die Zuführebene 1 eine weitere schlitzförmige Ausnehmung in Zuführrichtung auf, in welche eine drehbar gelagerte, im Wesentlichen kreisförmige Mitnehmerscheibe (oder Auskämmscheibe) 17 eingreift, deren Hauptebene ebenfalls in Zuführrichtung liegt. Die Mitnehmerscheibe 17 weist an ihrem äusseren Rand periodische Ausnehmungen auf. An die Mitnehmerscheibe 17 schliesst sich im Weiteren ein Förderband 18 an.

Das erfindungsgemässe Verfahren wird mit der in Figur 1 dargestellten Vorrichtung wie folgt durchgeführt. Ein Drahtbündel aus einer grossen Anzahl fertig vorbereiteter, langer dünner Drähte wird auf die Zuführebene 1 gegeben. Durch die Schwerkraft bewegen sich die Drähte des Bündels tendenziell in Richtung des Drahtrückhalters 3. Durch dessen äussere, allmählich in Richtung der Zuführebene zulaufende Begrenzung wird die Mehrzahl der Drähte im Stauraum 4 zurückgehalten. Nur die Drähte der untersten, auf der Zuführebene 1 aufliegenden Schichten können die Öffnung zwischen dem Drahtrückhalter 3 und der Zuführebene 1 passieren und weiter in Zuführrichtung rutschen bzw. rollen.

So gelangen diese Drähte in die Vereinzelungszone 19 zwischen dem Hebeelement 12 und dem Expansionsraum 6. Sobald einer der Arme 10, 11 des Hebeelements 12 durch die Rotation der Scheibe 13 über die Zuführebene 1 hinaus ragt, erfasst er einige jener Drähte, die sich gerade in der Vereinzelungszone 19 befinden und hebt sie an. Dadurch werden einige Drähte wieder entgegen der Zuführrichtung in den Stauraum 4 zurück bewegt und andere Drähte gelangen in den Expansionsraum 6. Im Expansionsraum 6 können sich die Drähte parallel ausrichten, weil ihnen dort mehr Platz zur Verfügung steht und sie dort also lockerer angeordnet sind als im Drahtbündel, im Stauraum oder in den engen Bereichen zwischen dem Drahtrückhalter 3 und der Zuführebene 1. Die Drähte, welche durch das Hebeelement 12 in den Stauraum zurück gedrückt worden sind, führen überdies im Stauraum zu einer Auflockerung der dort liegenden Drähte und fördern dadurch das Nachrutschen neuer Drähte.

Die im Expansionsraum 6 parallel ausgerichteten Drähte fallen aufgrund der Schwerkraft wiederum auf die Zuführebene 1. Die Geschwindigkeit des Motors 15 und damit der rotierenden Scheibe 13 des Hebeelements 12, also die Frequenz mit welcher einer der Arme 10, 11 durch die Zuführebene 1 hindurch tritt, lässt sich so einstellen bzw. regeln, dass in dem Moment, in dem die parallel ausgerichteten Drähte wieder auf die Zuführebene 1 gelangen, gerade kein Hebevorgang erfolgt. Die Drähte können sich also ungehindert weiter in Zuführrichtung bewegen und passieren als einlagige Drahtschicht den Kontrollspalt 8 des Führungsorgans 7. Dieser ist gerade so hoch, dass eine einlagige Drahtschicht mit geringem Spiel Platz hat und überkreuzte Drähte zurückgehalten werden. Seine Höhe beträgt z. B. das 1.1- bis 1.4-fache des Drahtdurchmessers. In jedem Fall sollte die Höhe kleiner als der doppelte Drahtdurchmesser sein.

Die Mitnehmerscheibe 17 dreht sich in Zuführrichtung und erfasst mit jeder ihrer Ausnehmungen jeweils einen einzelnen Draht, welcher den Kontrollspalt 8 passiert hat. Durch die Mitnehmerscheibe 17 werden die nun vereinzelten Drähte weiter gefördert und zum weiteren Transport z. B. auf das Förderband 18 mit konstantem Abstand abgelegt.

Falls das Verfahren mit Drähten einer grösseren Dicke durchgeführt werden soll, wird der Drahtrückhalter 3 von der Zuführebene 1 weg nach oben bewegt, so dass einerseits der Kontrollspalt 8 verbreitert und andererseits der Expansionsraum vergrössert wird.

Das Verfahren und die Vorrichtung in der dargestellten Form sind insbesondere für Drähte geeignet, deren Länge ca. 800-mal so gross ist wie ihr Durchmesser. Durch Variation der Dimensionen der Vorrichtung, insbesondere des Drahtrückhalters und des Hebeelements kann die erfindungsgemässe Vorrichtung auch anderen Drahtlängen und -durchmessern angepasst werden. Eine weitere Möglichkeit zur Anpassung ergibt sich, wenn die Neigung des Expansionsraums verstellt werden kann.

Je nach Drahtlänge kann zudem die Anzahl der Vorrichtungen zur Drahtvereinzelung gewählt werden, die parallel entlang der Breite der Zuführebene (d. h. der Länge der Drähte) angeordnet werden. Die Vereinzelung kann in diesem Fall noch verbessert werden, wenn die Hebeelemente der Vorrichtungen phasenmässig unterschiedlich angetrieben werden. Bei kürzeren (oder dickeren) Drähten kann es hingegen optimal sein, die einzelnen Vorrichtungen in Phase anzutreiben. In beiden Fällen können die Phasenunterschiede durch eine sich über die ganze Breite der Vorrichtung erstreckende gemeinsame Antriebswelle fixiert werden.

Die Umdrehungsgeschwindigkeit des Hebeelements und damit die Frequenz der Hebebewegung muss nicht konstant sein. Sie kann vielmehr auch durch Sensoren gesteuert werden, die z. B. die Anzahl Drähte im Expansions- oder Stauraum oder andere Parameter messen. Die Geschwindigkeit bzw. Frequenz des Hebeelements wird in diesem Fall laufend der aktuellen Situation so angepasst, dass die parallele Anordnung der Drähte sowie das Nachrutschen neuer Drähte optimal gefördert werden. Auch die Phasenverschiebung zwischen verschiedenen, in der Breite der Zuführebene angeordneten Vorrichtungen kann durch Sensoren in ähnlicher Weise flexibel steuerbar sein.

Die Vorrichtung kann so ausgebildet werden, dass die Höhe des Kontrollspalts unabhängig von der Grösse des Expansionsraums einstellbar ist, z. B. indem der Kontrollspalt durch ein vom Drahtrückhalter getrenntes Element gebildet wird. Der Grösse des Expansionsraums kann im Übrigen auch durch eine Einstellung der Breite des Expansionsraums verändert werden.

Zusammenfassend ist festzustellen, dass durch die Erfindung ein Verfahren und eine Vorrichtung geschaffen werden, welche zur Vereinzelung von Drähten geeignet sind und die Zuführung der Drähte sowie deren parallele Ausrichtung verbessern und welche insbesondere für die Vereinzelung von Querdrähten bei Gitterschweissmaschinen geeignet sind. Das der Erfindung zu Grunde liegende Prinzip erlaubt aber auch die Vereinzelung anderer drahtähnlicher Objekte.

## Patentansprüche

1. Verfahren zum Vereinzeln von Drähten eines Drahtbündels oder ähnlichen langen, dünnen, gebündelten Objekten, wobei das Drahtbündel auf eine in eine Zuführrichtung geneigte Zuführebene gegeben wird, so dass die Drähte sich unter Wirkung der Schwerkraft auf ein Führungsorgan mit Kontrollspalt zu bewegen können, welcher eine einem Durchmesser der Drähte angepasste Breite hat und zur Aufnahme der vereinzelten Drähte in Form einer einlagigen Drahtschicht ausgebildet ist, **dadurch gekennzeichnet, dass** ein Hebeelement durch die Zuführebene hindurch nach oben, entgegen der Zuführrichtung gegen die sich bewegenden Drähte geführt wird.

2. Verfahren nach Anspruch 1, **dadurch gekennzeichnet, dass** das Hebeelement mit einem gegenüber dem Hebeelement angeordneten Expansionsraum zusammenwirkt.

3. Verfahren nach Anspruch 2, **dadurch gekennzeichnet, dass** eine Grösse des Expansionsraums einstellbar ist.

4. Verfahren nach einem der Ansprüche 1 bis 3, **dadurch gekennzeichnet, dass** das Drahtbündel in einem Stauraum gestaut wird, wobei der Stauraum in Zuführrichtung hinter einem Drahtrückhalteelement gebildet wird.

5. Verfahren nach Anspruch 4, **dadurch gekennzeichnet, dass** der Expansionsraum gegenüber dem Stauraum abgetrennt ist und in Zuführrichtung vor dem Stauraum angeordnet ist.

6. Verfahren nach Anspruch 5, **dadurch gekennzeichnet, dass** der Expansionsraum als Aussparung im Drahtrückhalteelement ausgebildet ist.

7. Verfahren nach einem der Ansprüche 1 bis 5, **dadurch gekennzeichnet, dass** das Hebeelement sternförmig ist und entgegen der Zuführrichtung rotiert.

8. Verfahren nach einem der Ansprüche 1 bis 6, **dadurch gekennzeichnet, dass** die vereinzelten Drähte einer Mitnehmerscheibe zugeführt werden.

9. Vorrichtung zum Vereinzeln von Drähten eines Drahtbündels oder ähnlich langen, dünnen, gebündelten Objekten, umfassend
a) eine in einer Zuführrichtung geneigte Zuführebene zur Aufnahme des Drahtbündels,
b) ein Hebeelement, welches entgegen der Zuführrichtung durch die Zuführebene hindurch nach oben gegen die Drähte geführt werden kann,
c) ein zentral angeordnetes Führungsorgan mit Kontrollspalt, welcher eine einem Durchmesser der Drähte angepasste Spaltbreite hat und zur Aufnahme der vereinzelten Drähte in Form einer einlagigen Drahtschicht ausgebildet ist.

10. Vorrichtung nach Anspruch 9, **gekennzeichnet durch** einen Expansionsraum gegenüber dem Hebeelement.

11. Vorrichtung nach Anspruch 10, **dadurch gekennzeichnet, dass** eine Grösse des Expansionsraums einstellbar ist.

12. Vorrichtung nach einem der Ansprüche 9 bis 11, **gekennzeichnet durch** ein Drahtrückhalteelement zur Bildung eines Stauraums in Zuführrichtung hinter dem Drahtrückhalteelement.

13. Vorrichtung nach Anspruch 12, **dadurch gekennzeichnet, dass** der Expansionsraum gegenüber dem Stauraum abgetrennt ist und in Zuführrichtung vor dem Stauraum angeordnet ist.

14. Vorrichtung nach einem der Ansprüche 9 bis 13, **dadurch gekennzeichnet, dass** der Expansionsraum als Aussparung im Drahtrückhalteelement ausgebildet ist.

15. Vorrichtung nach einem der Ansprüche 9 bis 14, **dadurch gekennzeichnet, dass** das Hebeelement sternförmig ist und entgegen der Zuführrichtung rotierbar angeordnet ist.

16. Vorrichtung nach einem der Ansprüche 9 bis 15, **gekennzeichnet durch** eine Mitnehmerscheibe zum Weiterbewegen der vereinzelten Drähte.
